# FASCICULE DE BREVET EUROPEEN

(11) **EP 0 760 600 B1**
(45) Date de publication et mention de la délivrance du brevet: **08.03.2006**
(21) Numéro de dépôt: 95920975.0
(22) Date de dépôt: 23.05.1995
(51) Int. Cl.: A01N 25/04, A01N 53/00

(54) **NOUVELLES COMPOSITIONS PESTICIDES DU TYPE "EMULSION HUILE DANS L'EAU"**
NEUE PESTIZIDE ÖL-IN-WASSER EMULSIONSZUSAMMENSETZUNGEN
NOVEL PESTICIDAL OIL-IN-WATER EMULSION COMPOSITIONS

(30) Priorité: 24.05.1994 FR 9406242
(43) Date de publication de la demande: 12.03.1997
(73) Titulaire: Bayer CropScience S.A., 69009 Lyon (FR)
(72) Inventeur: HENRIET, Michel, F-13390 Auriol (FR); HUGONNET, Jean-François, F-13950 Cadolive (FR); SCHOENI, Jean-Paul, D-65195 Wiesbaden (DE)
(74) Mandataire: Lutze, Oliver
(86) Numéro de dépôt international: PCT/FR1995/000672
(87) Numéro de publication internationale: WO 1995/031898

(56) Documents cités:
- EP-A- 0 432 061
- EP-A- 0 500 401
- WO-A-93/00007
- PESTICIDE SCIENCE., vol. 26, no. 1, 1989 BARKING GB, pages 51-77, T.F.TADROS 'Colloidal Aspects of Pesticidal and Pharmaceutical Formulations - An Overview'
- DATABASE WPI Week 8335 Derwent Publications Ltd., London, GB; AN 83-750620 [35] & JP,A,58 124 703 (SUMITOMO CHEMICAL) , 25 Juillet 1983
- DATABASE WPI Week 7441 Derwent Publications Ltd., London, GB; AN 74-71665V [41] & JP,A,49 012 027 (TAKEDA CHEM IND) , 2 Février 1974

## Description

La présente invention concerne de nouvelles compositions pesticides du type "émulsion huile dans l'eau".

On connaissait des émulsions aqueuses concentrées renfermant une matière active pesticide et un solvant comme le phtalate de diéthyle (cf EP 432061, EP 500401), on connaissait également l'utilisation de silice dans les émulsions pesticides (voir Pesticide Science 26(1) 51-77 (1989), WO-A 93/00007

L'invention a pour objet des compositions pesticides du type "émulsion huile dans l'eau" renfermant :
- 0,1 à 60 % de pyréthrinoide
- 5 à 50 % de solvant choisi parmi les phtalates et l'ester méthylique d'un mélange d'acide caprylique et d'acide caprique,
- 1 à 3 % de silice,

Le but de la présente invention est de présenter des formulations fluides constituées par la dispersion dans une phase aqueuse continue de gouttelettes contenant le pesticide.

Les formulations de l'invention entraînent des effets secondaires associés à la matière active, par exemple l'irritation des voies respiratoires, moindres que ceux observés avec les formulations classiques comme les concentrés émulsionnables.

Les formulations de l'invention renferment une quantité de solvant moindre que les formulations classiques, ce qui entraîne une diminution de la toxicité intrinsèque (notamment l'irritation occulaire et dermique) du produit formulé ainsi qu'une diminution des risques liés à l'environnement.

Les formulations de l'invention en raison de la nature du solvant organique utilisé et de la réduction de la concentration du solvant limitent ainsi les risques d'inflammabilité.

Dans les formulations de l'invention :
1 - le solvant organique n'est pas choisi dans la classe des hydrocarbures aromatiques utilisés dans de nombreuses préparations phytosanitaires de pyréthrinoïdes,
2 - la phase aqueuse n'est pas du type de celles rencontrées habituellement dans les émulsions concentrées de type "huile dans eau". En effet, si la phase aqueuse utilisée dans la présente invention peut incorporer des co-formulants tels qu'un système mouillant/dispersant, un agent antigel, un système épaississant, des agents antimousses rencontrés tant dans une suspension concentrée que dans une émulsion concentrée, elle comprend un dérivé silicique qui n'est généralement pas présent dans une formulation sous forme d'émulsion concentrée, mais est caractéristique d'une suspension concentrée.

L'invention a plus particulièrement pour objet les formulations caractérisées en ce que le pyréthrinoïde est choisi parmi les composés suivants: la deltaméthrine, l'acrinathrine, la tralométhrine, la perméthrine, la cyperméthrine, l'alphaméthrine, la cyhalothrine, le fenvalérate, la cyfluthrine, le flucythrinate, le fluvalinate, la fenpropathrine, la bifenthrine, l'esfenvalérate, l'alphacyperméthrine, la bétacyfluthrine, la lambdacyhalothrine, le taufluvalinate ou le silafluofen.

Comme formulations préférées, on peut citer celles dans lesquelles le principe actif est l'acrinathrine ou encore celles dans lesquelles le principe actif est la deltaméthrine.

L'invention a plus particulièrement pour objet les compositions pesticides caractérisées en ce que le solvant est un phtalate, par exemple le diéthylphtalate.

Comme silice dont le rôle est non seulement de viscosifier la formulation finale mais également de participer à la réduction des effets secondaires néfastes de la matière active, on peut citer par exemple, les silices colloïdales précipitées (par exemple : silice précipitée amorphe, marque commerciale : WESSALON S®) et pyrogénées.

Dans l'exposé de la présente invention, tous les pourcentages indiqués sont sauf indication contraire, des pourcentages pondéraux.
Parmi les compositions préférées
on peut citer les compositions caractérisées en ce qu'elles renferment en outre:
- 1 à 20 % d'un ou plusieurs agents tensio-actifs,
- 10 à 20 % d'un agent antigel,
- 0,1 à 5 % d'un agent épaississant de type minéral,
- 0,005 à 4 % d'un agent épaississant de type organique,
- 0,05 à 0,5 % d'un agent stabilisant,
- 0,05 à 0,3 % d'un agent conservateur,
- 0,05 à 0,5 % d'un agent antimousse,

ou encore les compositions caractérisées en ce qu'elles renferment :
- 1 à 50 % de matière active de la classe des pyréthrinoïdes,
- 10 à 30 %, de solvant organique choisi dans la classe des phtalates et si nécessaire, d'un cosolvant organique,
- 1,5 à 6 % d'un ou plusieurs agents tensio-actifs,
- 12 à 16 % d'un agent antigel,
- 1,5 à 2 % de silice,
- 1,5 à 3 % d'un agent épaississant de type minéral
- 0,15 à 3 % d'un agent épaississant de type organique,
- 0,1 à 0,2 % d'un agent stabilisant,
- 0,1 à 0,2 % d'un agent conservateur,
- 0,1 à 0,25 % d'un système antimousse,
- 50 à 60 % d'eau.

Pour minimiser les effets secondaires associés à la matière active tels qu'une irritation des voies respiratoires, mais tout en maintenant une bonne efficacité biologique, il est important également :
1 - d'utiliser une quantité minimale de solvant organique,
2 - d'incorporer une quantité minimale de tensioactifs (système mouillant/dispersant).

Par le terme agent tensioactif, on entend un composé possédant des propriétés mouillantes et/ou dispersantes et/ou émulsifiantes permettant de stabiliser l'émulsion formée par la dispersion de la phase organique dans la phase aqueuse continue et de disperser les agglomérats en particules individuelles ou prévenir la floculation et retarder la sédimentation des particules dispersées dans la formulation. Le composé tensioactif assure également le mouillage, soit des ingrédients solides lors de la préparation de la formulation, soit au moment de la préparation de la bouillie pour application. Le composé tensioactif favorise également le mouillage de la cible (plante, insecte) au moment de la pulvérisation de la bouillie, ainsi que l'étalement, l'adhérence, la persistance de la matière active sur la cible visée.

L'agent tensioactif peut être un dérivé ionique ou non ionique ou un mélange de tels dérivés tensioactifs.

Comme composés utilisables en tant qu'agent mouillant, on peut citer par exemple, les sels de type alkyl sulfate ; les sels de type alkyl éther sulfate ; les sels de type alkylaryl sulfonate, notamment les alkylnaphtalène sulfonate alcalins ; les sels d'acides polycarboxyliques ; les polycondensats d'oxyde d'éthylène sur des alcools gras ou sur des acides gras ou sur des amines grasses ; des phénols substitués, notamment des alkylphénols ou des arylphénols ; des sels d'esters d'acides sulfosucciniques ; les sels d'α-oléfines sulfonates ; des dérivés de la taurine, notamment des alkyltaurates.

Comme composés utilisables en tant qu'agent dispersant, on peut citer, par exemple, les polymères de type arylsulfonate, notamment les polynaphtalènes sulfonates alcalins obtenus par condensation de dérivés (alkyl) aryl sulfonates avec du formaldéhyde ; les lignosulfonates ; les polyphényl sulfonates ; les sels d'acides polyacryliques ; les sels d'acides lignosulfoniques ; des sels d'acides phénols sulfoniques ou naphtalène sulfoniques ; les esters phosphoriques d'alcools ou de phénols polyéthoxylés (par exemple : le sel de potassium de l'ester phosphorique du tristyrylphénol polyéthoxylé, marque commerciale SOPROPHOR FLK) ; des esters d'acides gras et de polyols (par exemple : le mono-abiétate de polyéthylène glycol, marque commerciale SECOSTER MA 300) ; les dérivés à fonctions sulfates, sulfonates et phosphates des composés précédents.

Comme composés possédant des propriétés émulsifiantes (mais également mouillantes et/ou dispersantes), on peut citer, par exemple, l'huile de ricin condensée avec l'oxyde d'éthylène (par exemple : huile de ricin polyéthoxylée, marque commerciale EMULSOGEN EL) et/ou l'oxyde de propylène ; les dérivés de phénols substitués, notamment des alkylphénols ou des arylphénols et les alcools gras condensés avec l'oxyde d'éthylène et/ou l'oxyde de propylène, des blocs copolymères d'oxyde d'éthylène et d'oxyde de propylène ; ces dérivés associés ou non avec des sels d'alkylbenzène sulfonate ; des dérivés polymériques (comme par exemple : un dérivé de polyvinylpyrrolidone alkylé, marque commerciale AGRIMER AL 904 ; un copolymère quaternisé de vinylpyrrolidone et de méthacrylate de diméthylaminoéthyle, marque commerciale GAFQUAT 755N, des dérivés d'alcool polyvinylique obtenus par hydrolyse partielle d'acétate de polyvinyle, marques commerciales MOWIOL 3/83 et MOWIOL 8/88).

Comme composés utilisables en tant qu'agent antigel, c'est-à-dire des composés évitant la congélation de formulations (à base d'eau) qui font l'objet de la présente invention et pouvant également jouer le rôle de cotensioactifs (composés synergisant certaines propriétés tensioactives mentionnées ci-avant, comme l'étalement de la matière active) en association avec le(s) tensioactif(s) décrits précédemment, on peut citer par exemple, les dérivés de glycols comme l'éthylène glycol et le monopropylène glycol, le glycérol et l'urée.

Comme système épaississant, on peut utiliser par exemple, des dérivés minéraux comme des silicates par exemple les attapulgites, les bentonites, les laponites ; des dérivés aluminosilicates (par exemple: aluminosilicate de magnésium, marque commerciale VANGEL B) et organiques comme des dérivés de la cellulose (notamment la carboxyméthyl cellulose, l'hydroxyéthyl cellulose, l'hydroxypropyl cellulose) ; des polymères comme des esters d'acides polyacryliques, des dérivés de polyvinylpyrrolidones ; des gommes comme la gomme arabique et des gommes de type xanthane (par exemple : gomme xanthane, marque commerciale RHODOPOL 23) ou une association de dérivés minéraux et organiques cités précédemment.

Comme stabilisant de la matière active, on peut utiliser par exemple, des acides organiques comme l'acide acétique et l'acide citrique.

Comme agent conservateur, on peut utiliser par exemple, une composition de formol, des dérivés de p-hydroxybenzoate d'alkyle comme le p-hydroxybenzoate de propyle (marque commerciale PRESERVAL P).

Comme composés antimousses, on préfère utiliser les dérivés siliconés (par exemple : des diméthylpolysiloxanes, marque commerciale RHODORSIL 416 ; une émulsion aqueuse de diméthylopysiloxanes, marque commerciale RHODORSIL 426R) et les dérivés organiques halogénés.

Les compositions selon l'invention peuvent encore contenir tous les additifs solides ou liquides correspondant aux techniques habituelles de mise en formulation telles qu'un colorant, par exemple.

L'invéntion a également pour objet un procédé de préparation caractérisé en ce que:
- l'on prépare la phase organique en dissolvant la matière active dans la phase organique,
- l'on prépare la phase aqueuse renfermant le dérivé silicique,
- l'on additionne la phase organique à la phase aqueuse et homogénéise l'émulsion obtenue à l'aide d'un appareil approprié,
- l'on règle éventuellement la viscosité de la formulation obtenue.

L'invention a également pour objet l'application en agriculture des compositions de l'invention caractérisée en ce que lesdites compositions sont diluées dans l'eau et répandues sur les cultures.à raison de 0,1 1 à 0,6 1 de produit formulé par hectare pour des volumes de bouillies variant de 150 à 500 1 d'eau par hectare.

L'invention a plus particulièrement pour objet l'application des compositions de l'invention à la lutte contre les acariens et les insectes parasites de la vigne et des arbres fruitiers.

Les formulations sont diluées dans de l'eau à raison de 0,2 à 0,6 litre de produit formulé par hectare en vigne pour des volumes de bouillies variant de 150 à 500 litres d'eau par hectare, de préférence variant entre 200 et 300 litres d'eau par hectare, et de 0,1 litre par hectolitre en arboriculture.

Ces bouillies diluées, pulvérisées sur différents ravageurs en vigne (acariens : T. urticae, P. ulmi, T. mac-danieli, E. carpini ; Cicadelle des grillures, Cicadelle de la flavescence dorée) et en arboriculture (arbres fruitiers à pépins : acariens : T. urticae, P. ulmi) ont montré une excellente activité pesticide.

Ces bouillies sont habituellement épandues à raison de 50 à 1000 1/ha, de préférence 100 à 500 1/ha en vigne et de 500 à 5000 1/ha, de préférence 800 à 3000 1/ha en arboriculture, la matière active de 80 à 100 g/ha (pyréthrinoïdes).

Les exemples suivants, illustrent l'invention et montrent comment elle peut être mise en oeuvre. Les matières actives mises en oeuvre sont à l'état "technique", comme on peut les obtenir directement en sortie de fabrication ou sous forme de prémix dans un solvant.

### 1- PROCEDE DE PREPARATION SELON L'INVENTION

La première phase consiste à préparer la phase organique (ou concentré organique) en dissolvant la matière active à savoir l'acrinathrine, dans un solvant organique à savoir le diéthylphtalate, sous agitation magnétique ou mécanique à l'aide d'un agitateur à hélice.

La deuxième phase consiste à préparer la phase aqueuse (ou concentré aqueux). Cette étape requiert tout d'abord la dissolution du p-hydroxybenzoate de propyle (utilisé comme agent conservateur, marque commerciale PRESERVAL P) dans le monopropylène de glycol (utilisé comme agent antigel) à l'aide d'un agitateur à hélice. Sous agitation mécanique, on incorpore les constituants suivants, à température ambiante, dans l'ordre indiqué ci-dessous :
- acide citrique (utilisé comme stabilisant de la matière active pyréthrinoïde),
- eau,
- ester phosphorique d'un dérivé du tristyrylphénol polyéthoxylé (utilisé comme agent tensioactif, marque commerciale SOPROPHOR FLK),
- aluminosilicate de magnésium sous forme colloïdale (utilisé comme agent épaississant, marque commerciale VANGEL B),
- silice précipitée amorphe (utilisée comme agent épaississant et participant à la réduction des effets secondaires de la matière active, marque commerciale WESSALON S),
- diméthylpolysiloxanes (utilisé comme agent antimousse lors du procédé de fabrication de la formulation, marque commerciale : RHODORSIL 416),
- émulsion aqueuse de diméthylpolysiloxanes (utilisée comme agent antimousse lors de l'application de la formulation diluée dans l'eau, marque commerciale RHODORSIL 426 R).

D'autres agents tensioactifs peuvent être introduits dans la phase aqueuse selon les exemples décrits ci-après.

L'agitation est maintenue pendant 15 minutes de manière à obtenir une homogénéisation complète de la phase aqueuse.

La troisième phase consiste à préparer l'émulsion de type "huile dans eau" par dispersion de la phase organique dans la phase aqueuse, à température ambiante et sous agitation continue.

L'homogénéisation de l'émulsion s'effectue à l'aide d'un broyeur colloïdal tel qu'une ultradisperseuse (produisant un haut taux de cisaillement, ce qui permet d'obtenir de fines gouttelettes huileuses dispersées dans la phase aqueuse).

Dans la mesure où la silice utilisée ne possède pas la granulométrie optimale (diamètre-médian compris entre 0,8 et 5 microns), un passage de l'êmulsion obtenue ci-dessus dans un broyeur à billes opérant en milieu liquide (broyeur horizontal) peut permettre d'obtenir la granulométrie attendue et finaliser l'homogénéisation de l'émulsion.

La quatrième phase consiste à optimiser si nécessaire, la viscosité finale de l'émulsion ci-dessus, par addition, sous agitation à l'aide d'un agitateur à hélice, d'un agent épaississant tel qu'une gomme xanthane introduite par exemple sous forme d'un sol dans l'eau.

Les compositions mentionnées dans les exemples 1 à 10, ci-après ont été préparées suivant le procédé décrit ci-dessus.

Les détails de préparation de l'exemple 1, sont les suivants : (préparation de 1 litre de produit formulé).

### Première phase : préparation de la phase organique.

Dissolution de l'acrinathrine dans le diéthyl phtalate sous agitation magnétique.

| | |
|---|---|
| Acrinathrine technique (100 %) | 75,0 g |
| Diéthyl phtalate | 250.0 g |
| | 325,0 g |

### Deuxième phase : préparation de la phase aqueuse.

1) Dissolution du p-hydroxybenzoate de propyle (agent conservateur) dans le monopropylène glycol à l'aide d'un agitateur à hélice, vitesse d'environ 600 tours/minute.
2) Addition des co-formulants suivants dans le mélange précédent, dans l'ordre indiqué ci-dessous, sous agitation mécanique (à l'aide d'un agitateur à hélice, vitesse d'environ 600 tours/minute).

| | |
|---|---|
| Acide citrique | 1,00 g |
| Monopropylène glycol | 160,00 g |
| Eau | 345,50 g |
| Sel de potassium du phosphate de tristyrylphénol polyéthoxylé | 16,00 g |
| Aluminosilicate de magnésium | 2,50 g |
| Silice précipité amorphe | 15,00 g |
| Diméthyl polysiloxane | 1,00 g |
| Emulsion aqueuse de diméthylpolysiloxane | 0.50 g |
| | 541,50 g |

3) Homogénéisation de la phase aqueuse pendant 15 minutes supplémentaires à l'aide d'un agitateur à hélice, vitesse d'environ 600 tours/minute.

Les tensioactifs, outre le sel de potassium du phosphate de tristyrylphénolpolyéthoxylé, mentionnés dans les exemples précédents sont incorporés dans la phase aqueuse après l'introduction de celui-ci.

### Troisième Phase : préparation de l'émulsion de type "huile dans eau"

Addition de la phase organique dans la phase aqueuse à température ambiante et homogénéisation de l'émulsion obtenue à l'aide d'une ultradisperseuse.

| | |
|---|---|
| Phase aqueuse | 541,50 g |
| Phase organique | 325,00 g |
| | 866,50 g |

### Quatrième phase : réglage de la viscosité finale

Dispersion du sol de gomme xanthane (1,1 % de gomme xanthane dans l'eau) et du diméthylpolysiloxane dans l'émulsion préparée précédemment à l'aide d'un agitateur à hélice, vitesse d'environ 1000 tours/minute et homogénéisation de la formulation finale pendant 30 minutes supplémentaires.

| | |
|---|---|
| Emulsion "huile dans eau" | 866,50 g |
| Gomme xanthane (sol à 1,1 %) | 200,00 g |
| Diméthylpolysiloxanes | 0,50 g |
| | 1067,00 g |

### EXEMPLE 1 :

| | g/l |
|---|---|
| Acrinathrine tech. (100 %) | 75,00 |
| Diéthyl phtalate (solvant organique) (1) | 250,00 |
| p-hydroxybenzoate de propyle (agent conservateur) (2) | 1,00 |
| Monopropylène glycol (agent antigel) (3) | 160,00 |
| Acide citrique (stabilisant) (4) | 1,00 |
| Eau | 543,30 |
| Sel de potassium du phosphate de tristyrylphénol polyéthoxylé (mouillant/dispersant) (5) | 16;00 |
| Aluminosilicate de magnésium (agent épaississant) (6) | 2,50 |
| Silice précipitée amorphe (7) | 15,00 |
| Diméthylpolysiloxanes (agent antimousse) (8) | 1,50 |
| Emulsion aqueuse de diméthylpolysiloxanes (agent antimousse) (9) | 0,50 |
| Gomme xanthane (agent épaississant) (10) | 2,20 |

Pour la préparation de l'exemple 1, on peut utiliser les produits commerciaux suivants:
(1) DIETHYLPHTALATE ex Rhône-Poulenc
(2) PRESERVAL P ex Laserson & Sabethay
(3) MONOPROPYLENE GLYCOL ex Elf-Atochem
(4) ACIDE CITRIQUE ex Jungbunzlauer
(5) SOPROPHOR FLK ex Rhône-Poulenc
(6) VANGEL B ex Vanderbilt
(7) WESSALON ex Degussa AG
(8) RHODORSIL 416 ex Rhône-Poulenc
(9) RHODORSIL 426R ex Rhône-Poulenc
(10) RHODOPOL 23 ex Rhône-Poulenc

### EXEMPLE 2 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 543,30 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 2,20 |
| Copolymère quaternisé de vinylpyrrolidone et de méthacrylate de diméthylaminoéthyle (agent émulsifiant) | 10,00 |

### EXEMPLE 3 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 537,50 |
| Sel de potassium du phosphate de tristyrylphénol polyéthpxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent aritimousse) | 0,50 |
| Gomme xanthane (agent épaississant) | 2,20 |
| Polyvinylpyrrolidone alkylée (agent émulsifiant) | 5,00 |

### EXEMPLE 4 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 532,50 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 2,20 |
| Polyvinylpyrrolidone alkylée (agent émulsifiant) | 10,00 |

### EXEMPLE 5 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 521,50 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 2,20 |
| Huile de ricin polyéthoxylée (agent émulsifiant) | 20,00 |

### EXEMPLE 6 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 531,00 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 2,20 |
| Huile de ricin polyéthoxylée | 10,00 |
| (agent émulsifiant) | |

### EXEMPLE 7 :

| | g/l |
|---|---|
| Acrinathrine tech. (100 %) | 75,00 |
| Diéthyl phtalate (solvant organique) | 350,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 450,00 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 3,00 |
| Polyvinylpyrrolidone alkylée (agent émulsifiant) | 5,00 |

### EXEMPLE 8 :

| | g/l |
|---|---|
| Acrinathrine tech. (100 %) | 75,00 |
| Diéthyl phtalate (solvant organique) | 350,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 443,06 |
| Sel de potassium du phosphate de tristyrylphénol polyéthoxylé (mouillant/dispersant) | 16,00 |
| Aluminosilicate de magnésium | 2,50 |
| (agent épaississant) Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 2,20 |
| Huile de ricin polyéthoxylée (agent émulsifiant) | 10,00 |

### EXEMPLE 9 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 75,50 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Alcool polyvinylique obtenu par hydrolyse partielle d'acétate de polyvinyle (83 mole %) de viscosité 3 mPa.s en solution aqueuse à 4 % (solut. à 20 % dans l'eau) (agent émulsifiant/épaississant) | 60,50 |
| Alcool polyvinylique obtenu par hydrolyse partielle d'acétate de polyvinyle (88 mole %) de viscosité 4 mPa.s en | 60,50 |
| solution aqueuse à 4 % (solut. à 20 % dans l'eau) (agent émulsifiant/épaississant) | |

### EXEMPLE 10 :

| | g/l |
|---|---|
| Acrinathrine tech. (100 %) | 75,00 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 533,30 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 2,20 |
| Mono-abiétate de polyéthylène glycol 300 | 10,00 |

### EXEMPLE 11 :

| | g/l |
|---|---|
| Deltaméthrine tech. (99,4 %) | 25,15 |
| Diéthyl phtalate (solvant organique) | 250,00 |
| p-hydroxybenzoate de propyle (agent conservateur) | 1,00 |
| Monopropylène glycol (agent antigel) | 160,00 |
| Acide citrique (stabilisant) | 1,00 |
| Eau | 537,50 |
| Sel de potassium du phosphate de tristyrylphénol polyéthoxylé (mouillant/dispersant) | 16,00 |
| Aluminosilicate de magnésium (agent épaississant) | 2,50 |
| Silice précipitée amorphe | 15,00 |
| Diméthylpolysiloxanes (agent antimousse) | 1,50 |
| Emulsion aqueuse de diméthylpolysiloxanes (agent antimousse) | 0,50 |
| Gomme xanthane (agent épaississant) | 3,00 |
| Polyvinylpyrrolidone alkylée | 5,00 |

### EXEMPLE 12 :

| | g/l |
|---|---|
| Acrinathrine tech. (99,80 %) | 75,15 |
| Ester méthylique d'un mélange d'acide caprylique/caprique (solvant organique (1) | 250,00 |
| p-hydroxybenzoate de propyle (agent conservateur) (2) | 1,00 |
| Monopropylène glycol (agent antigel) (3) | 160,00 |
| Acide citrique (stabilisant) (4) | 1,00 |
| Eau | 472,00 |
| Alkylphénol polyalkoxylé (mouillant/dispersant) (5a) | 16,00 |
| Aluminosilicate de magnésium (agent épaississant) (6) | 2,50 |
| Silice précipitée amorphe (7) | 15,00 |
| Composé de diméthylpolysiloxanes (agent antimousse) (8) | 1,50 |
| Emulsion aqueuse de diméthylpolysiloxanes (agent antimousse) (9) | 0,50 |
| Gomme xanthane (agent épaississant) (10) | 1,60 |
| Polyvinylpyrrolidinone alkylée (agent émulsifiant) (11) | 5,00 |

### EXEMPLE 13 :

| | g/l |
|---|---|
| Acrinathrine tech. (99,80 %) | 75,15 |
| Ester méthylique d'un mélange diacide caprylique/caprique (solvant organique (1) | 250,00 |
| p-hydroxybenzoate de propyle (agent conservateur) (2) | 1,00 |
| Monopropylène glycol (agent antigel) (3) | 160,00 |
| Acide citrique (stabilisant) (4) | 1,00 |
| Eau | 471,80 |
| Bloc copolymère d'oxyde d'éthylène et d'oxyde de propylène sur le butanol (mouillant/dispersant) (5b) | 16,00 |
| Aluminosilicate de magnésium (agent épaississant) (6) | 2,50 |
| Silice précipitée amorphe (7) | 15,00 |
| Composé de diméthylpolysiloxanes (agent antimousse) (8) | 1,50 |
| Emulsion aqueuse de diméthylpolysiloxanes (agent antimousse) (9) | 0,50 |
| Gomme xanthane (agent épaississant) (10) | 1,60 |
| Polyvinylpyrrolidinone alkylée (agent émulsifiant) (11) | 5,00 |

Pour la préparation des exemples 12 et 13, on peut utiliser les produits commerciaux suivants:
(1) RADIA 7983 ex FINA
(2) PRESERVAL P ex Laserson & Sabethay
(3) MONOPROPYLENE GLYCOL ex Elf-Atochem
(4) ACIDE CITRIQUE ex Jungbunzlauer
(5a) WITCONOL NS 108 LQ ex Witco
(5b) WITCONOL NS 500 K ex Witco
(6) VANGEL B ex Vanderbilt
(7) WESSALON ex Degussa AG
(8) RHODORSIL 416 ex Rhône-Poulenc
(9) RHODORSIL 426R ex Rhône-Poulenc
(10) RHODOPOL 23 ex Rhône-Poulenc
(11) AGRIMER AL 904 ex ISP

### TEST DE STABILITE

Les compositions de l'invention sont conservées pendant 6 semaines consécutives à 50°C et 6 semaines en cycle journalier de 12 heures (la température est de -6°C pendant 12 h et de 44°C pendant 12 h).

A la fin de l'étude, on n'a conservé que les formulations de l'invention conservant leurs propriétés initiales.

### TEST D'EFFICACITE BIOLOGIOUE

L'étude de l'efficacité des compositions de l'invention sur Tetranychus urticae et sur Panonychus ulmi a été réalisée comparativement avec celle du RUFAST (formulation commerciale d'acrinathrine).

On a utilisé une dose de 45 g ma/ha sur Tetranychus urticae (plante hôte : haricot) et on a utilisé une dose de 4,5 g ma/hl sur Panonychus ulmi (plante hôte : pommier).

Les compositions de l'invention et les compositions commerciales présentent la même activité.

Les compositions de l'invention et les compositions commerciales présentent la même activité.

### TOLERANCE-RESPIRATOIRE DE COMPOSITIONS DE L'INVENTION CHEZ LE COBAYE

L'étude de l'effet irritant a été étudié chez des cobayes mâles pesant environ 300 g. Le test utilisé est un test d'inhalation.

La nébulisation des produits a été réalisée à l'aide d'une buse de type Spraying Systems produisant un brouillard composé de particules de 0,5 à 20 microns.

Les cobayes sont placés individuellement dans une cage au travers de laquelle circule le brouillard produit au moyen d'une buse de type Spraying Systems. Pour chaque formulation, on compte le nombre de toux provoquées en 5 minutes par chacun des cobayes, à une concentration déterminée en mg de matière active par litre de bouillie. On calcule la moyenne des toux sur 6 animaux.

Les compositions étudiées sont les suivantes :

Une composition EC contenant 150 g/l d'acrinathrine dans du SOLVESSO 100 et de l'acétate de méthyl glycol, une composition EC contenant 150 g/l d'acrinathrine dans du SOLVESSO 100 et de l'heptanone-2, des compositions de l'invention renfermant 75 g/l d'acrinathrine (compositions des exemples 1, 2, 3, 4, 5 et 9) .

Pour chaque formulation testée, on trace une courbe rapportant la moyenne du nombre de toux en 5 minutes en fonction des concentrations de matière active par litre de bouillies étudiées. Le tableau indique les résultats obtenus par le calcul de surface sous chaque courbe. Plus la surface est importante, plus la formulation est irritante.

| Formulations | Surfaces sous courbes |
|---|---|
| RUFAST EC 150 (1) | 4298,47 |
| RUFAST EC 150 (2) | 3835,95 |
| Composition de l'exemple 2 | 2223,20 |
| Composition de l'exemple 9 | 2179,05 |

| | |
|---|---|
| (1) Formulation d'acrinathrine 150 g/l EC à base de SOLVESSO 100 et d'acétate de méthylglycol | |
| (2) Formulation d'acrinathrine 150 g/l EC à base de SOLVESSO 100 et d'heptanone-2 | |

Conclusion : les formulations de l'invention sont nettement moins irritantes que celles de l'art antérieur.

### TOLERANCE OCULAIRE DE COMPOSITIONS DE L'INVENTION

La tolérance oculaire de compositions de l'invention a été étudiée sur la cornée de boeuf isolée.

La réaction d'irritation oculaire est un phénomène complexe pouvant entraîner non seulement une opacification de la cornée mais également dans certains cas des lésions de l'épithélium cornéen avec changement de la perméabilité.

La méthode sur la cornée de boeuf, permettant d'évaluer le potentiel irritant de substances solubles et insolubles, comprend deux étapes :
- mesure de l'opacité après application du produit sur la face épithéliale de la cornée,
- puis application d'une solution de fluorescéine et détermination de la quantité de ce marqueur ayant traversé la cornée (mesure de la perméabilité).

Afin d'établir une corrélation avec les données in vivo un score d'irritation in vitro a été établi. Ce score est égal à la valeur d'opacité plus quinze fois la valeur de la perméabilité, qui est exprimée en densité optique. Plus le score d'irritation est élevé, plus la formulation est irritante. Ces calculs ont été définis après exploitation des résultats d'une étude de validation portant sur 50 produits chimiques différents testés en aveugle par 12 laboratoires européens.

Les compositions étudiées sont les suivantes :

Une composition EC contenant 150 g/l d'acrinathrine dans du SOLVESSO 100 et de l'acétate de méthyl glycol, une composition EC contenant 150 g/l d'acrinathrine dans du SOLVESSO 100 et de l'heptanone-2, des compositions de l'invention renfermant 75 g/l d'acrinathrine (compositions des exemples 1, 3, et 5).

Une composition EC contenant 25 g/l de deltaméthrine dans du SOLVESSO 100 et une composition de l'invention renfermant 25 g/l de deltaméthrine (composition de l'exemple 11).

Les tableaux indiquent les résultats obtenus suivant la méthode basée sur la cornée de boeuf isolée (dont le principe est décrit ci-dessus).

Il a été trouvé que les compositions de l'invention sont nettement moins irritantes que les compositions de l'art antérieur.

### TEST 1

| Compositions | Méthode C.B.I. | |
|---|---|---|
| RUFAST EC 150 (1) | Score | 80,0 |
| RUFAST EC 150 (2) | Score | 90,0 |
| Composition de l'exemple 1 | Score | 1,5 |
| Composition de l'exemple 3 | Score | 1,2 |
| Composition de l'exemple 5 | Score | 2,4 |

| | | |
|---|---|---|
| (1) Formulation d'acrinathrine 150 g/l EC à base de SOLVESSO 100 et d'acétate de méthylglycol | | |
| (2) Formulation d'acrinathrine 150 g/l EC à base de SOLVESSO 100 et d'heptanone-2 | | |
| C.B.I. Cornée de boeuf isolée | | |

### TEST 2

| | | |
|---|---|---|
| Compositions | Méthode C.B.I. | |
| DECIS EC 250(1) | Score | 77,0 |
| Composition de l'exemple 11 | Score | 1,7 |

| | | |
|---|---|---|
| (1) Formulation de deltaméthrine 25 g/l EC à base de SOLVESSO 100 | | |
| C.B.I. Cornée de boeuf isolée | | |

## Revendications

1. Compositions pesticides du type "émulsion huile dans l'eau" renfermant :
- 0,1 à 60 % de pyréthrinoide
- 5 à 50 % de solvant choisi parmi les phtalates et l'ester méthylique d'un mélange d'acide caprylique et d'acide caprique,
- 1 à 3 % de silice,
- 30 à 70 % d'eau.

2. Compositions pesticides définies à la revendication 2, **caractérisées en ce que** le pyréthrinoide est choisi parmi les composés suivants : la deltaméthrine, l'acrinathrine, la tralométhrine, la perméthrine, la cyperméthrine, l'alphaméthrine, la cyhalothrine, le fenvalérate, la cyfluthrine, le flucythrinate, le fluvalinate, la fenpropathrine, la bifenthrine, l'esfenvalérate, l'alphacyperméthrine, la bétacyfluthrine, la lambdacyhalothrine, le taufluvalinate ou le silafluofen.

3. Compositions selon la revendication 2, **caractérisées en ce que** le principe actif est l'acrinathrine.

4. Compositions selon la revendication 2, **caractérisées en ce que** le principe actif est la deltaméthrine.

5. Compositions selon l'une quelconque des revendications 1 à 4, **caractérisées en ce que** le solvant est un phtalate.

6. Compositions selon la revendication 5, **caractérisées en ce que** le phtalate est le diéthylphtalate.

7. Compositions selon l'une quelconque des revendications 1 à 6 , **caractérisées en ce qu'**elles renferment en outre :
- 1 à 20 % d'un ou plusieurs agents tensio-actifs,
- 10 à 20 % d'un agent antigel,
- 0,1 à 5 % d'un agent épaississant de type minéral,
- 0,005 à 4 % d'un agent épaississant de type organique,
- 0,05 à 0,5 % d'un agent stabilisant,
- 0,05 à 0,3 % d'un agent conservateur,
- 0,05 à 0,5 % d'un agent antimousse.

8. Compositions selon l'une quelconque des revendications 1 à 6 , **caractérisées en ce qu'**elles renferment:
- 1 à 50 % de matière active de la classe des pyréthrinoïdes,
- 10 à 30 %, de solvant organique choisi dans la classe des phtalates, et si nécessaire, d'un cosolvant organique,
- 1,5 à 6 % d'un ou plusieurs agents tensio-actifs,
- 12 à 16 % d'un agent antigel,
- 1,5 à 2 % de silice,
- 1,5 à 3 % d'un agent épaississant de type minéral
- 0,15 à 3 % d'un agent épaississant de type organique,
- 0,1 à 0,2 % d'un stabilisant,
- 0,1 à 0,2 % d'un agent conservateur,
- 0,1 à 0,25 % d'un système antimousse,
- 50 à 60 % d'eau.

9. Application en agriculture des compositions selon l'une quelconque des revendications 1 à 8, **caractérisée en ce que** lesdites compositions sont diluées dans l'eau et répandues sur les cultures à raison de 0,1 1 à 0,6 1 de produit formulé par hectare pour des volumes de bouillies variant de 150 à 500 1 d'eau par hectare.

10. Application selon la revendication 9, à la lutte contre les acariens et les insectes parasites de la vigne et des arbres fruitiers.

11. Procédé de préparation des formulations selon l'une quelconque des revendications 1 à 8, **caractérisé en ce que** :
- l'on prépare la phase organique en dissolvant la matière active dans la phase organique,
- l'on prépare la phase aqueuse renfermant la silice,
- l'on additionne la phase organique à la phase aqueuse et homogénéise l'émulsion obtenue à l'aide d'un appareil approprié,
- l'on règle éventuellement la viscosité de la formulation obtenue.

## Claims

1. Pesticidal oil-in-water emulsion compositions containing:
- 0.1 to 60% of pyrethrinoid,
- 5 to 50% of solvent chosen from phthalates and the methyl ester of a mixture of caprylic acid and of capric acid,
- 1 to 3% of silica,
- 30 to 70% of water.

2. Pesticidal compositions defined in Claim 1, **characterized in that** the pyrethrinoid is chosen from the following compounds: deltamethrin, acrinathrin, tralomethrin, permethrin, cypermethrin, alphamethrin, cyhalothrin, fenvalerate, cyfluthrin, flucythrinate, fluvalinate, fenpropathrin, bifenthrin, esfenvalerate, alphacypermethrin, betacyfluthrin, larizbdacyhalothrin, taufluvalinate or silafluofen.

3. Compositions according to Claim 2, **characterized in that** the active ingredient is acrinathrin.

4. Compositions according to Claim 2, **characterized in that** the active ingredient is deltamethrin.

5. Compositions according to any one of Claims 1 to 4, **characterized in that** the solvent is a phthalate.

6. Compositions according to Claim 5, **characterized in that** the phthalate is diethyl phthalate.

7. Compositions according to any one of Claims 1 to 6, **characterized in that** they also contain:
- 1 to 20% of one or more surfactants,
- 10 to 20% of an antifreeze,
- 0.1 to 5% of an inorganic-type thickener,
- 0.005 to 4% of an organic-type thickener,
- 0.05 to 0.5% of a stabilizer,
- 0.05 to 0.3% of a preserving agent,
- 0.05 to 0.5% of an antifoam.

8. Compositions according to any one of Claims 1 to 6, **characterized in that** they contain:
- 1 to 50% of an active substance of the class of pyrethrinoids,
- 10 to 30% of an organic solvent chosen from the class of phthalates, and, if necessary, of an organic cosolvent,
- 1.5 to 6% of one or more surfactants,
- 12 to 16% of an antifreeze,
- 1.5 to 2% of silica,
- 1.5 to 3% of an inorganic-type thickener,
- 0.15 to 3% of an organic-type thickener,
- 0.1 to 0.2% of a stabilizer,
- 0.1 to 0.2% of a preserving agent,
- 0.1 to 0.25% of an antifoam system,
- 50 to 60% of water.

9. Use in agriculture of the compositions according to any one of Claims 1 to 8, **characterized in that** said compositions are diluted in water and are spread onto crops at a rate of 0.1 l to 0.6 l of formulated product per hectare for slurry volumes ranging from 150 to 500 l of water per hectare.

10. Use according to Claim 9, for controlling parasitic acaridans and insects of grapevine and of fruit trees.

11. Method for preparing the formulations according to any one of Claims 1 to 8, **characterized in that**:
- the organic phase is prepared by dissolving the active substance in the organic phase,
- the aqueous phase containing the silica is prepared,
- the organic phase is added to the aqueous phase and the emulsion obtained is homogenized using an appropriate device,
- the viscosity of the formulation obtained is optionally regulated.

## Patentansprüche

1. Pestizide Zusammensetzungen des Typs einer "Öl-in-Wasser-Emulsion", umfassend:
- 0,1 bis 60 % Pyrethrinoid,
- 5 bis 50 % Lösungsmittel, ausgewählt aus Phthalaten und Methylethern einer Mischung aus Capryl- und Caprinsäure,
- 1 bis 3 % Kieselsäure und
- 30 bis 70 % Wasser.

2. Pestizide Zusammensetzungen gemäß Anspruch 1, **dadurch gekennzeichnet, dass** das Pyrethrinoid aus den folgenden Verbindungen ausgewählt ist: Deltamethrin, Acrinathrin, Tralomethrin, Permethrin, Cypermethrin, Alphamethrin, Cyhalothrin, Fenvalerat, Cyfluthrin, Flucythrinat, Fluvalinat, Fenpropathrin, Bifenthrin, Esfenvalerat, Alphacypermethrin, Betacyfluthrin, Lambdacyhalothrin, Taufluvalinat oder aus Silafluofen.

3. Zusammensetzungen gemäß Anspruch 2, **dadurch gekennzeichnet, dass** das Wirkprinzip Acrinathrin ist.

4. Zusammensetzungen gemäß Anspruch 2, **dadurch gekennzeichnet, dass** das Wirkprinzip Deltamethrin ist.

5. Zusammensetzungen gemäß einem der Ansprüche 1 bis 4, **dadurch gekennzeichnet, dass** das Lösungsmittel ein Phthalat ist.

6. Zusammensetzungen gemäß Anspruch 5, **dadurch gekennzeichnet, dass** das Phthalat Diethylphthalat ist.

7. Zusammensetzungen gemäß einem der Ansprüche 1 bis 6, **dadurch gekennzeichnet, dass** sie außerdem umfassen:
- 1 bis 20 % eines oder mehrerer oberflächenaktiver Mittel,
- 0 bis 20 % eines Antigelmittels,
- 0,1 bis 5 % eines Verdickungsmittels vom mineralischen Typ,
- 0,005 bis 4 % eines Verdickungsmittels vom organischen Typ,
- 0,05 bis 0,5 % eines Stabilisiermittels,
- 0,05 bis 0,3 % eines Konservierungsmittels,
- 0,05 bis 0,5 % eines Antischaummittels.

8. Zusammensetzungen gemäß einem der Ansprüche 1 bis 6, **dadurch gekennzeichnet, dass** sie umfassen:
- 1 bis 50 % Wirkstoff der Klasse von Pyrethrinoiden,
- 10 bis 30 % organisches Lösungsmittel, ausgewählt aus der Klasse der Phthalate, und nötigenfalls eines organischen Co-Lösungsmittels,
- 1,5 bis 6 % eines oder mehrerer oberflächenaktiver Mittel,
- 12 bis 16 % eines Antigelmittels,
- 1,5 bis 2 % einer Kieselsäure,
- 1,5 bis 3 % eines Verdickungsmittels vom mineralischen Typ,
- 0,15 bis 3 % eines Verdickungsmittels vom organischen Typ,
- 0,1 bis 0,2 % eines Stabilisiermittels,
- 0,1 bis 0,2 eines Konservierungsmittels,
- 0,1 bis 0,25 % eines Antischaumsystems,
- 50 bis 60 % Wasser.

9. Landwirtschaftliche Anwendung der Zusammensetzungen gemäß einem der Ansprüche 1 bis 8, **dadurch gekennzeichnet, dass** die genannten Zusammensetzungen in Wasser verdünnt und auf die Kulturen mit 0,1 bis 0,6 L formuliertem Produkt pro Hektar für Volumina aus Schlempen von 150 bis 500 L Wasser pro Hektar ausgebracht und verteilt werden.

10. Anwendung gemäß Anspruch 9 zur Bekämpfung von Milben und parasitären Insekten auf Weinstöcken und Obstbäumen.

11. Verfahren zur Herstellung der Formulierungen gemäß einem der Ansprüche 1 bis 8, **dadurch gekennzeichnet, dass** man:
- die organische Phase durch Auflösen des Wirkstoffs in der organischen Phase zubereitet,
- die wässrige Phase zubereitet, die die Kieselsäure umfasst,
- die organische Phase zur wässrigen Phase gibt und die erhaltene Emulsion mittels eines geeigneten Geräts homogenisiert und man
- gegebenenfalls die Viskosität der erhaltenen Formulierung anpasst und einstellt.
